# EUROPEAN PATENT APPLICATION

(11) **EP 0 903 368 A1**
(43) Date of publication of application: **24.03.1999**
(21) Application number: 98115947.8
(22) Date of filing: 25.08.1998
(51) Int. Cl.: C08J 9/00, C08K 5/01

(54) **Process for the preparation of rigid polyurethane expanded products with an open cell structure**

(30) Priority: 18.09.1997 IT MI972115
(71) Applicant: Enichem S.p.A., S. Donato Milanese (IT)
(72) Inventor: Cecchini, Corrado, Salzano, (Venezia) (IT); Ciriello, Luciano, Chioggia, (Venezia) (IT); Tarari, Vittorio, Treviso (IT); Tolomei, Angelo, Oriago di Mira, (Venezia) (IT)
(74) Representative: Gennari, Marco, Dr.

(57) **Abstract**

Process for the preparation of rigid polyurethane expanded products with an open cell structure which comprises reacting:
A) at least one isocyanic component belonging to the group of MDI;
B) a polyol component comprising:
   B₁) at least one polyether and/or polyester polyol with a functionality equal to or higher than 2 and an equivalent weight of up to 4000;
   B₂) an expanding agent;
   B₃) a cell-opening agent consisting of a paraffine lubricating oil; and
   B₄) a cell-stabilizing agent.

## Description

The present invention relates to a process for the preparation of rigid polyurethane expanded products with an open cell structure.

More specifically, the present invention relates to a process for the preparation of rigid polyurethane expanded products, based on MDI (diphenylmethane diisocyanate), with a low density and having an open cell structure, and the polyol compositions suitable for the purpose.

Low density rigid polyurethane expanded products are normally used as thermoinsulating materials in civil and industrial building and as heat insulators in the production of electric household appliances (refrigerators, freezers, boilers, etc.), lorries, railway carriages or deep-freeze containers.

This type of expanded product is generally characterized by a cell structure having at least 90% closed cells. This characteristic is important for obtaining a high thermoinsulating power as it allows the expanding agent, mainly responsible for the low thermal conductivity of the material, to remain inside the polymer for long periods.

The necessity of having rigid polyurethane expanded products with open cells has arisen to satisfy two requirements which have recently emerged on the market; these are the production of thermoinsulating panels under vacuum and the possibility of considerably reducing the density of expanded products maintaining their good characteristics of dimensional stability.

As specified by L.R. GLIKSMAN and M.R. TORPEY in "Proceedings of Polyurethane World Congress 1987", pages 80-84, the thermal conductivity of a rigid polyurethane expanded product is produced by the sum of three contributions:
- conduction through the solid phase (λs);
- conductivity by radiation (λr); and
- conduction through the vapor phase (λg).

The latter contribution is eliminated by applying a vacuum and therefore, to completely extract all the cell gas without allowing the entrance of air, the cells of the expanded product must be intercommunicating, i.e. open.

In addition, the deformation which a rigid polyurethane expanded product undergoes over a period of time can be mainly attributed to the stress to which the material is subjected following a difference in pressure which is determined after a period of time between the outer and inner part of the expanded product following diffusive phenomena such as the inlet of air and release of the expanding agent and the possible partial condensation of the latter. The polymer resists this stress in proportion to its own compression resistance. When the density of the expanded product is significantly reduced, its compression resistance is insufficient to oppose the pressure stress and the material shrinks. In order to overcome this drawback, one possibility is to cancel the difference in pressure existing between the outer and inner part of the expanded product obtaining an open-cell structure.

The Applicant has now found a new process for the preparation of rigid polyurethane expanded products with a density of between 20 and 50 Kg/m³ and a structure having up to 100% of open cells which is based on the use of an agent, prediluted in one of the polyurethane reagents, preferably in the polyol component, whose particular function of cell-opener has never been described in scientific literature.

The present invention therefore relates to a process for the preparation of rigid polyurethane expanded products with an open cell structure which comprises reacting:
a) at least one isocyanic component belonging to the group of MDI;
B) a polyol component comprising:
   B₁) at least one polyether and/or polyester polyol with a functionality equal to or higher than 2 and an equivalent weight of up to 4000;
   B₂) an expanding agent;
   B₃) a cell-opening agent consisting of a paraffine lubricating oil; and
   B₄) a cell-stabilizing agent.

According to the present invention, the isocyanic component can be selected from 4,4'-diphenylmethane diisocyanate (MDI), possibly mixed with at least 5% by weight of 2,4' isomer, and polymethylenepolyphenylpolyisocyanates having general formula (I): 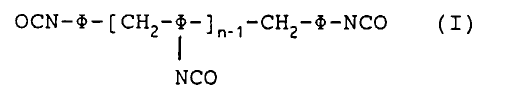 wherein Φ is equal to a phenyl radical and n an integer greater than or equal to 1. The products having general formula (I), known as polymeric MDI, are obtained by the phosgenation of aniline-formaldehyde condensates and have an average isocyanic functionality of 2.6-2.8. These products are available on the market under various names such as "TEDIMON 31" of the Applicant, "SUPRASEC DNR" of ICI or "DESMODUR 44 V20" of Bayer.

As well as the products mentioned above, the modified MDI urethonimine, carbodiimide and biuret, can also be used.

Further examples of the isocyanic component which can be used in the preparation of the expanded products of the present invention consist of prepolymers prepared by the reaction of a polyisocyanate belonging to the group of MDI with a smaller quantity than the stoichiometric value of:
a) polyether or polyester polyols having a minimum hydroxyl or amine functionality equal to 2 and a molecular weight ranging from 60 to 8,000, selected from those described hereunder; and/or
b) reactive products having general formula (II): 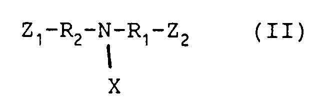 at least, monofunctional, wherein:
   X can be a hydrogen atom, or Z₁-R₂- or Z₂-R₁-;
   Z₁ and Z₂, the same or different, represent a hydrogen atom, or -OH, -NH₂, R₃ groups, with R₃ selected from an alkyl, cycloalkyl, aryl or alkylaryl radical having from 1 to 12 carbon atoms;
   R₁ and R₂, the same or different, represent an alkylene, cycloalkylene, arylene or alkylarylene radical containing from 1 to 20 carbon atoms, R₁ and R₂ can also be polyoxyalkylene chains having an average molecular weight of up to 8,000 obtained by the condensation of oxyalkylene groups containing from 1 to 4 carbon atoms.

The polyol component B comprises at least one compound (B₁) having active hydrogen atoms with respect to the isocyanic group, preferably at least one polyether polyol, one polyester polyol or a mixture of the two.

Examples of polyether polyols are products with a low molecular weight which contain at least two active hydrogen atoms, such as glycols, triols, tetrols, polyamines and alkanolamines or mixtures of these. Illustrative examples are ethyleneglycol, diethyleneglycol, propyleneglycol, dipropyleneglycol, 1,4-butyleneglycol, glycerine, trimethylolpropane, pentaerythritol, sorbitol, sucrose, ethylenediamine, triethanolamine, toluenediamine, etc.

Further examples of polyols are polyether polyols having a high molecular weight, for example ranging from 500 to 8,000 and a hydroxyl or amine functionality greater than or equal to 2. These are compounds which can be obtained by the condensation of alkylene oxides having from 2 to 6 carbon atoms as starters with at least two active hydrogen atoms, for example the glycols or amines listed above. Illustrative examples of polyether polyols with a high molecular weight are products obtained by the polycondensation of ethylene and/or propylene oxide starting from polyfunctional starters.

Other molecules having active hydrogens present in component B can be polyester polyols, preferably aromatic, obtained by the reaction of a polyhydroxyl compound with a polycarboxyl acid, or the corresponding anhydrides, and in which the molar ratio OH/COOH between the reagents is higher than 1, for example between 1.1 and 2.

The polyhydroxyl component can be selected from C₂-C₂₀ alkyl, C₅-C₂₀ cycloalkyl or C₆-C₂₀ aryl diols and/or triols such as ethyleneglycol, diethyleneglycol, propyleneglycol, dipropyleneglycol, triethyleneglycol, 1,4-butandiol, neopentylglycol, cyclohexandimethanol, bisphenol-A, trimethylolethane, trimethylolpropane, or from polyalkyleneglycols, such as polyethyleneglycol and polypropyleneglycol, with hydroxy chain-ends and having an average molecular weight ranging from 200 to 2,000.

The polycarboxyl component is preferably of the aromatic type and is selected from phthalic anhydride (acid), isophthalic acid and terephthalic acid. Aliphatic acids can also be used however, such as adipic acid, glutaric acid, succinic acid, etc.

Further examples of polyester polyols are the transesterification products with glycols of polyester resins such as polyethyleneterephthalate (PET), polybutyleneterephthalate, etc. or the transesterification products, again with glycols, of processing residues/waste products of dimethylterephthalate.

Dimethylterephthalate is prepared by the oxidation of xylene and subsequent esterification with methanol. Portions of by-products mainly consisting of mixtures of dimethylterephthalate and oligomers and impurities of the aldehyde type, are generated from the bottom of the recovery column of the glycol, after esterification and in the recrystallization phase of the dimethylterephthalate fraction. These residues are extremely suitable for the preparation of polyester polyols by transesterification with diols.

Examples of polyester polyols at present available on the market are Glendion 9801, of the Applicant, and PS 3152 of Stepanpol.

More detailed information on polyols and, in particular, on polyether or polyester polyols can be obtained from scientific literature, for example from "Saunders & Frish - Polyurethanes, Chemistry and Tecnology" Interscience, New York, 1964.

The expanding agent (B₂) preferably consists of water. In the embodiment of polyurethane foams according to the process of the present invention, water, used in a quantity ranging between 1,5 and 15% by weight, with respect to (B₁), has a critical function as, from the reaction between water and the NCO groups of the isocyanic component (A), there is the formation of ureic bonds associated with the development of carbon dioxide which causes the expansion/swelling process of the polyurethane resin to obtain the expanded product.

In the preparation of polyurethane foams with a reduced density, for example having a density equal to or less than 25 Kg/m³, the expanding function of water alone is not sufficient to reach these density values without the creation of drawbacks (scorching) due to the exothermy of the reaction between water and the isocyanic groups. For this reason, the expanding action of the water can be supported by expanding agents of a physical nature, selected from hydrofluoroalkanes such as 1,1,1,2-tetrafluoroethane (HFC-134a), pentafluoropropane (HFC-245), pentafluorobutane (HFC-365), 1,1,1,4,4,4-hexafluorobutane(HFC-356),1,1-difluoroethane (HFC-152a), dichloromonofluoroethane (HCFC-141b), chlorodifluoro-ethane (HCFC-142b), chloro-difluoro-methane (HCFC-22), perfluoropentane, perfluorohexane, perfluoroheptane, etc., liquid CO₂, hydrocarbons such as n-butane, i-butane, n-pentane, i-pentane, cyclopentane, n-hexane, cyclohexane, etc. or their mixtures, dimethylcarbonate, etc.

The cell-opening agent (B₃) consists of a paraffine lubricating oil which is very homogeneously dispersed in component B using turbostirrers so that, during the polymerization phase, small particles of oil are englobed in the polymer under formation. Owing to the expansion process and thanks to the presence of the cell-stabilizing agent, bubbles are formed in the reaction mixture, which, on swelling, gradually create the formation of cells. The walls of the cell, pushed by the vapors in expansion, stretch and become thinner; when their thickness reaches the dimensions of the particles of lubricating oil, owing to a very different interfacial tension value between the polymer and the oil, the particles of lubricant are detached from the membranes leaving a hole on the cell wall. These holes, having very reduced dimensions, (less than 10-12 µm), were revealed by means of photographs of the expanded product taken at the scan electronic microscope (SEM).

Paraffine lubricating oils are products which are known in scientific literature and described, for example, in "Encyclopedia of Chemical Technology", Fourth Edition, Vol. 15, page 470.

To obtain the results described above, it is preferable for the oil to have a viscosity ranging from 50 to 300 mPa x sec at 25°C. The quantity of lubricating oil to be used is between 0.5 and 5% by weight, preferably between 0.5 and 2% or between 0.5 and 1.5% by weight of the total component B. Paraffine oils available on the market, which can be used in the process of the present invention are Lubrizol 5959 of Lubrizol, or OTE of AGIP.

The cell-stabilizing agent (B₄) essentially consists of a silicon surface-active agent and has the function of stabilizing the formation of the cells. These are polyalkylsiloxanes with a low molecular weight (about 5,000), having polyoxyalkylene side chains, in which the alkylene group contains from 1 to 4 carbon atoms. Examples of this type of product at present on the market are silicons of the series Tegostab B 8000, of Goldschmidt or L 6900 products of OSI Specialties.

In addition to the constituents (B₁)-(B₄) described above, the polyol component can comprise other additives. For example, the component can contain a mixture of catalysts consisting of aliphatic or cycloaliphatic tertiary amines and/or organometallic catalysts. Typical examples of amine catalysts consist of dimethylcyclohexylamine, dimethylethanolamine, pentamethyldiethylenetriamine, diazabicyclo-octane, morpholine compounds, amino-ethers, etc. Orgamometallic catalysts which can be used are fatty acids, such as potassium octoate and acetate, tin dibutyldilaurate, stannous octoate, etc. Other additives can be flame-resistant agents, thermo-oxidation stabilizers, pigments, etc. Also in this case, technical details on the components and preparation of polyurethane foam are available in scientific literature for example in "Saunders & Frish - Polyurethanes, Chemistry and Tecnology" mentioned above.

Some illustrative but non-limiting examples are provided for a better understanding of the present invention and for its embodiment.

### EXAMPLE 1

A mixture (component B) is prepared having the following composition:
a) 50 parts of a conventional polyether polyol based on sucrose (starter) and propylene oxide having a hydroxyl number equal to 490 mg KOH/g;
b) 25 parts of a brominated polyester polyol (20% bromine) obtained by the transesterification of the processing waste product of dimethylterephthalate with diethyleneglycol, having a hydroxyl number equal to 300 mg KOH/g;
c) 25 parts of a polyether polyol based on aromatic amine (orthotoluenediamine) and propylene oxide having a hydroxyl number equal to 380 mg KOH/g;
d) 20 parts of trichloropropylphosphate;
e) 4.6 parts of water;
f) 2.5 parts of siliconic surface-active agent B 8466 of Goldschmidt;
g) 0.5 parts of potassium acetate in dipropyleneglycol;
h) 1.65 parts of dimethylcyclohexylamine;
i) 1.2 parts of Lubrizol 5959.

100 parts of the present mixture are reacted with 157 parts of polymeric MDI having 30.7% by weight of free NCO groups, in the presence of 7 parts of n-pentane.

A rigid polyurethane expanded product is obtained having a free-growth density equal to 24.5 kg/m³ and content of closed cells, measured according to ASTM D 2856, equal to 0.

### EXAMPLE 2 (COMPARATIVE)

Preparing a mixture equal to that of example 1, but without Lubrizol 5959, and reacting it with the same quantity of polymeric MDI in the presence of the same quantity of n-pentane, a rigid polyurethane expanded product is obtained with a free-growth density equal to 25 kg/m³ and a content of closed cells equal to 92%.

### EXAMPLE 3

A mixture (component B) is prepared having the following composition:
a) 70 parts of a polyether polyol based on sorbitol and propylene and ethylene oxide (PO/EO = 70/30) having a hydroxyl number equal to 490 mg KOH/g;
b) 20 parts of the brominated polyester polyol of example 1;
c) 10 parts of a polyether polyol based on glycerine and propylene oxide having a hydroxyl number equal to 300 mg KOH/g;
d) 5.0 parts of water;
e) 2.5 parts of siliconic surface-active agent B 8462 of Goldschmidt;
f) 0.5 parts of an aminoether catalyst such as 2,2-bis-(dimethylaminoethyl) ether at 70% in dipropyleneglycol (NIAX A1);
g) 0.3 parts of dimethylcyclohexylamine;
h) 1.0 parts of OTE paraffinic oil of AGIP.

100 parts of the present mixture are reacted with 173 parts of polymeric MDI having 30.7% by weight of free NCO groups.

A rigid polyurethane expanded product is obtained having a free-growth density equal to 26 kg/m³ and content of closed cells, measured according to ASTM D 2856, equal to 0.

### EXAMPLE 4

A mixture (component B) is prepared having the following composition:
a) 70 parts of a polyether polyol based on sorbitol and propylene and ethylene oxide having a hydroxyl number equal to 490 mg KOH/g;
b) 20 parts of a polyester polyol obtained by the transesterification of the processing waste product of dimethylterephthalate with diethyleneglycol, having a hydroxyl number equal to 340 mg KOH/g;
c) 10 parts of a polyether polyol based on sorbitol/ethylene-diamine and propylene oxide having a hydroxyl number equal to 560 mg KOH/g;
d) 2.5 parts of water;
e) 2.0 parts of siliconic surface-active agent B 8462 of Goldschmidt;
f) 0.5 parts of an aminoether catalyst (NIAX A1);
g) 0.15 parts of dimethylcyclohexylamine;
h) 1.5 parts of Lubrizol 5959.

100 parts of the present mixture are reacted with 147 parts of polymeric MDI having 30.7% by weight of free NCO groups.

A rigid polyurethane expanded product is obtained having a free-growth density equal to 44 kg/m³ and content of closed cells, measured according to ASTM D 2856, equal to 0.

### EXAMPLE 5

A mixture (component B) is prepared having the following composition:
a) 80 parts of a polyether polyol based on glycerine and propylene oxide having a hydroxyl number equal to 270 mg KOH/g;
b) 20 parts of a polyester polyol based on triethanolamine and propylene oxide, having a hydroxyl number equal to 120 mg KOH/g;
c) 10 parts of trichloroisopropyl-phosphate;
d) 10 parts of water;
e) 2.5 parts of siliconic surface-active agent L 6900 of OSI Specialties;
f) 1 part of an aminoether catalyst (NIAX A 107);
g) 0.5 parts of a solution at 40% by weight of potassium acetate in dipropyleneglycol (Glendion ISC-9);
h) 0.7 parts of dimethylcyclohexylamine;
i) 3 parts of Lubrizol 5959.

100 parts of the present mixture are reacted with 208 parts of a prepolymer from polymeric MDI having a functionality of 2.7, modified with mother liquor of the MDI, and from a polyether polyol based on glycerine and propylene oxide with a hydroxyl number equal to 600 mg KOH/g. The end prepolymer has a content of free NCO groups equal to about 25% by weight and an average functionality of about 2.3.

A rigid polyurethane expanded product is obtained having a free-growth density equal to 20 kg/m³ and content of closed cells, measured according to ASTM D 2856, equal to 0.

## Claims

1. A process for the preparation of rigid polyurethane expanded products with an open cell structure which comprises reacting:
A) at least one isocyanic component belonging to the group of MDI;
B) a polyol component comprising:
B₁) at least one polyether and/or polyester polyol with a functionality equal to or higher than 2 and an equivalent weight of up to 4000;
B₂) an expanding agent;
B₃) a cell-opening agent consisting of a paraffine lubricating oil; and
B₄) a cell-stabilizing agent.

2. The process according to claim 1, wherein the isocyanic component is selected from 4,4'-diphenylmethane diisocyanate (MDI), optionally mixed with at least 5% by weight of 2,4' isomer, polymethylenepolyphenyl-polyisocyanates having general formula (I): 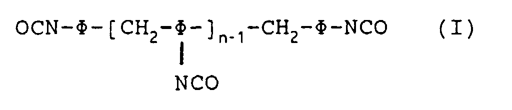 wherein Φ is equal to a phenyl radical and n an integer greater than or equal to 1 and the modified MDI urethonimine, carbodiimide and biuret.

3. The process according to claim 1, wherein the isocyanic component is selected from prepolymers prepared from the reaction of a polyisocyanate belonging to the group of MDI with a lesser quantity than the stoichiometric value of:
a) polyether or polyester polyols having a minimum hydroxyl or amine functionality equal to 2 and a molecular weight ranging from 60 to 8,000; and/or
b) reactive products having general formula (II): 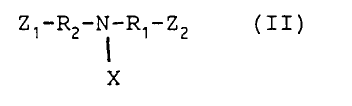 at least, monofunctional, wherein:
X can be a hydrogen atom, or Z₁-R₂- or Z₂-R₁-;
Z₁ and Z₂, the same or different, represent a hydrogen atom, or -OH, -NH₂, R₃ groups, with R₃ selected from an alkyl, cycloalkyl, aryl or alkylaryl radical having from 1 to 12 carbon atoms;
R₁ and R₂, the same or different, represent an alkylene, cycloalkylene, arylene or alkylarylene radical containing from 1 to 20 carbon atoms, R₁ and R₂ can also be polyoxyalkylene chains having an average molecular weight of up to 8,000 obtained by the condensation of oxyalkylene groups containing from 1 to 4 carbon atoms.

4. The process according to any of the previous claims, wherein the polyol component B comprises a polyether polyol with a low molecular weight selected from glycols, triols, tetrols, polyamines, alkanolamines or mixtures of these.

5. The process according to any of the previous claims, wherein the polyol component B comprises a polyether polyol having a high molecular weight and a hydroxyl or amine functionality greater than or equal to 2.

6. The process according to any of the previous claims, wherein the polyol component B comprises a polyester polyol which can be obtained from the reaction of a polyhydroxyl compound with a polycarboxyl acid, or the corresponding anhydride, and wherein the molar ratio OH/COOH between the reagents is higher than 1.

7. The process according to any of the previous claims, wherein the expanding agent comprises water in a quantity ranging from 1.5 to 15% by weight, with respect to (B₁).

8. The process according to any of the previous claims, wherein the cell-opening agent consists of a paraffine lubricating oil having a viscosity of between 50 and 300 mPaxsec at 25°C.

9. The process according to any of the previous claims, wherein the lubricating oil is used in a quantity of between 0.5 and 5% by weight, of the total of component B.

10. The process according to any of the previous claims, wherein the cell-stabilizing agent (B₄) essentially consists of a polyalkylsiloxane with a low molecular weight.

11. A polyol composition, for rigid polyurethane expanded products, comprising:
B₁) at least one polyether and/or polyester polyol with a functionality equal to or higher than 2 and an equivalent weight of up to 4000;
B₂) an expanding agent;
B₃) a cell-opening agent consisting of a paraffine lubricating oil; and
B₄) a cell-stabilizing agent.

12. Rigid polyurethane expanded products having an open cell structure which can be obtained with a process described in any of the previous claims.
